# FASCICULE DE BREVET EUROPEEN

(11) **EP 0 536 010 B1**
(45) Date de publication et mention de la délivrance du brevet: **01.04.1998**
(21) Numéro de dépôt: 92402282.5
(22) Date de dépôt: 13.08.1992
(51) Int. Cl.: G06F 9/46

(54) **Procédé et dispositif pour la gestion temps réel d'un système comprenant au moins un processeur apte à gérer plusieurs fonctions**
Verfahren und Vorrichtung zur Echtzeitverwaltung von einem System mit mindestens einem zur Verwaltung mehrerer Funktionen geeignetem Prozessor
Method and apparatus for the real-time control of a system comprising at least one processor capable of managing several functions

(30) Priorité: 03.10.1991 FR 9112171
(43) Date de publication de la demande: 07.04.1993
(73) Titulaire: SEXTANT AVIONIQUE, 92366 Meudon la Forêt Cédex (FR)
(72) Inventeur: Ducateau, Michel, F-28120 Nogent-le-Roi (FR); Sers, Jean-Marie, F-78140 Velizy (FR); Pain, Isabelle, F-78350 Jouy en Josas (FR)
(74) Mandataire: de Saint-Palais, Arnaud Marie

(56) Documents cités:
- EP-A- 0 223 463
- EP-A- 0 264 317
- US-A- 4 847 751
- US-A- 4 954 948
- ACM TRANSACTIONS ON COMPUTER SYSTEMS. vol. 5, no. 3, Août 1987, NEW YORK US pages 189 - 231 K. SCHWAN ET AL 'High-Performance Operating System Primitives for Robotics and Real-Time Control Systems'
- TECHNOLOGY AND SCIENCE OF INFORMATICS. vol. 3, no. 1, 1984, OXFORD GB pages 37 - 43 F. BROWAEYS ET AL 'Sceptre: proposed standard for a real-time executive kernel'
- COMPUTER. vol. 9, no. 10, Octobre 1976, LONG BEACH US pages 10 - 17 R. B. BUNT 'Scheduling Techniques for Operating Systems'

## Description

La présente invention concerne un procédé et un dispositif pour la gestion temps réel d'un système comprenant au moins un processeur apte à gérer plusieurs fonctions comportant chacune un ensemble de services réalisés par le processeur au cours de l'exécution d'un logiciel pouvant mettre en oeuvre des capteurs et/ou des actionneurs, cet ensemble de services s'appuyant à l'intérieur du processeur sur des ressources matérielles.

Elle s'applique essentiellement, mais non exclusivement, à l'optimisation et à la sécurité de la gestion du temps réel dans des architectures avioniques modulaires de type IMA ("Integrated Modular Avionics").

D'une manière générale, on sait qu'à l'heure actuelle, l'organisation des différents calculateurs sur un avion porteur est dite répartie, les calculateurs nécessaires pour assurer la réalisation des fonctions avioniques étant placés dans de multiples endroits du porteur.

Ceci conduit évidemment à certains inconvénients parmi lesquels on peut citer :
- un poids important dû aux structures mécaniques de chaque calculateur,
- un surdimensionnement global en terme de ressources matérielles comme les processeurs, les entrées sorties, les alimentations, etc...,
- des origines diverses de calculateurs (multi-équimentiers) donc de conception différente, qui entraînent une multitude de cartes électroniques différentes pour des fonctions similaires, alors que toutes les cartes présentant une même fonction générale (processeur, entrée/sortie, mémoire) sont globalement très proches.

Il est compréhensible que cette diversité entraîne des coûts de série et des coûts de maintenance non optimisés pour les avionneurs et les compagnies aériennes.

L'hétérogénéité du parc matériel électronique peut conduire également à des temps de blocage des appareils trop importants lors de défaillance en l'absence de rechange.

Pour essayer de supprimer ces inconvénients, une évolution notable est en cours. Cette évolution a pour objectif de concentrer dans des grands "racks" tout ou partie des fonctions réalisées par l'électronique embarquée (répartie aujourd'hui dans des calculateurs différents), en les implémentant sur des modules en nombre réduit standardisés pour que les avionneurs puissent s'approvisionner chez différents équipementiers.

L'ensemble des traitements réalisés par les ordinateurs ou calculateurs embarqués à bord d'un porteur peut être décomposé en grandes fonctions ou applications qui correspondent chacune à un service de très haut niveau pour ce dernier, et parmi lesquelles on trouve notamment :
- le pilotage automatique,
- les commandes de vol électrique,
- la maintenance intégrée,
- la gestion du vol,
- la gestion du carburant,
- la gestion des écrans de bord,
- la détection de fumée, etc...

Dans la suite de la description, une fonction sera assimilée à un groupe de tâches fournissant des services de haut niveau pour le porteur, ce groupe de tâches ne pouvant être réparti sur plus d'un module processeur. Plusieurs fonctions peuvent être implantées sur un même processeur.

L'intégration des fonctions dans un même "rack" avec un BUS fond de panier commun, le partage du même processeur pour certaines fonctions, le partage des entrées sorties servant aux communications entre le "rack", les capteurs et les actionneurs, les alimentations, ne sont pas sans poser des problèmes de sécurité.

Ces ressources doivent faire l'objet d'une attention particulière pour éviter que la défaillance d'un élément entraîne la mise hors service du "rack", donc d'un grand nombre de fonctions.

En effet, il existe des règles très strictes pour garantir au mieux la sécurité de l'appareil et vérifier que le cahier des charges a été tenu.

L'étape de certification, étape très coûteuse qui permet de qualifier l'équipement pour qu'il puisse être commercialisé, vérifie entre autre, le respect de ces règles.

L'invention a donc plus particulièrement pour but de résoudre ces problèmes.

Elle propose, à cet effet, un procédé pour la gestion du contexte temps réel d'un système comprenant au moins un processeur apte à gérer plusieurs fonctions, caractérisé en ce qu'il comprend les phases suivantes :
- le découpage temporel du cycle de traitement du processeur en tranches de durées éventuellement différentes ;
- l'affectation, à au moins une partie de ces tranches, de fonctions respectives, les tâches relatives à chacune de ces fonctions étant inopérantes en dehors de la tranche temporelle correspondant à cette fonction ;
- la sauvegarde, à la fin d'une tranche du contexte machine de la fonction en cours de traitement, et ce, en vue de la reprise de cette fonction lors de la tranche subséquente qui lui est associée ; et
- le chargement au début d'une nouvelle tranche, du contexte machine lié à l'activation de la fonction associée à cette tranche et qui a été précédemment sauvegardé à la fin d'une tranche antérieure correspondant à cette fonction.

Cette gestion par tranche de temps du processeur par fonction et non par tâche, pour traiter tour à tour et cycliquement les fonctions implantées sur le processeur, assure notamment la ségrégation des objets temps réel propres à chaque fonction, donc renforce la sécurisation et facilite la certification en autorisant une analyse comportementale temps réel par fonction, décorrélée des autres fonctions implantées.

Cette décorrélation permet d'offrir une souplesse dans la répartition fonctionnelle sur les différents processeurs du "rack", liée, par exemple, à des évolutions porteur et donc, allège grandement la difficulté face aux problèmes de certification.

Après analyse au niveau du "rack" de chaque fonction et de la charge processeur associée, le cycle de traitement de chaque processeur est découpé temporellement en tranches. La durée de chaque tranche peut être différente.

A chaque tranche peut être ou non affectée une fonction.

Supposons qu'à la tranche TX soit affectée la fonction FX.

C'est à l'intérieur de la tranche TX, que les tâches de la fonction FX concourent pour avoir le processeur sur lequel la fonction FX est implantée.

En dehors de la tranche TX, les tâches de la fonction FX sont inopérantes ou dans l'"état gelée".

L'étude du comportement des tâches d'une fonction pour la certification se limite presque exclusivement au comportement de la fonction sur un processeur virtuellement moins performant mais non partagé entre plusieurs fonctions.

Cette gestion permet à chaque fonction implantée de posséder tour à tour le processeur et les ressources matérielles partageables du processeur, et ceci, de manière cyclique.

Soient les fonctions F1, F2..., FN et un cycle de durée T :
- on attribue les ressources partageables à F1 pendant la durée t1,
- on attribue les ressources partageables à F2 pendant la durée t2,
- on attribue les ressources partageables à FN pendant la durée tn,
- puis à nouveau, on attribue les ressources partageables à F1 pendant la durée t1
   sachant que t1+t2+...+tn=T

D'une façon générale, le partage des différentes ressources entre les travaux en cours, la gestion des entrées-sorties et la prise en charge des fonctions auxiliaires (par exemple la gestion de la date et de l'heure) sont assurés par un noyau d'exécutif présentant les propriétés suivantes :
- il est capable d'exécuter en simultanéité apparente plusieurs programmes ; pour cela, le système d'exploitation distribue le temps du processeur (ou des processeurs) d'instruction et la mémoire centrale entre des entités appelées "tâches" ; il peut également fournir des mécanismes de communication entre les tâches ;
- il prend en charge le détail des opérations d'entrée-sortie, que ce soit en ce qui concerne leur ordonnancement dans le temps, la correction des erreurs ou la synthèse d'opérations complexes. Le langage de programmation de la machine virtuelle noyau se présente comme une extension du langage machine de l'ordinateur support, un mécanisme spécial permettant la création d'instructions nouvelles, appelées primitives dont le rôle est de demander l'intervention du noyau pour exécuter des opérations complexes. C'est en particulier à ce niveau que se situent les fonctions dites de temps réel qui permettent d'utiliser des dispositifs réservés au système.

La machine virtuelle noyau est accessible, d'une part, aux machines des niveaux supérieurs et, d'autre part, à travers ceux-ci à des tâches soumises par les utilisateurs.

On distingue deux niveaux d'exécutif sur un processeur géré par tranche de temps conformément à l'invention.

Le premier niveau ou "Exécutif Application" est celui sur lequel va s'appuyer une fonction pour assurer l'ordonnancement de ses tâches par rapport au contexte temps réel, donc aux ressources et aux événements dont a besoin la fonction pour s'exécuter à l'intérieur de la tranche de temps affectée cycliquement.

Le deuxième niveau ou "Exécutif Séquenceur" est celui qui va assurer les services nécessaires au partage temporel du processeur entre les différentes fonctions implantées sur le processeur et la gestion des événements globaux (au sens large) au processeur ou au "rack" comme l'initialisation du "rack" ou du module, l'initialisation d'une fonction, la coupure d'alimentation, les changements de mode comme le téléchargement de code lié à une ou des fonctions du "rack", la reconfiguration du "rack", la mise sous tension, etc...

Il s'avère que dans le cas des systèmes avioniques, la réalisation des deux niveaux d'exécutifs "Exécutif Séquenceur" et "Exécutif Application" en 'utilisant le langage machine du processeur ou un langage de programmation de haut niveau présente un certain nombre d'inconvénients. On peut citer entre autres, la difficulté de réalisation, des performances médiocres pour les différents services et une sécurisation très faible.

Il s'avère que l'électronique embarquée évolue dans un contexte temps réel critique à très haut niveau de sécurité et que les tentatives de réalisation même de noyau temps réel mono fonction pris en compte au niveau logiciel ne répondent qu'imparfaitement aux exigences d'un environnement temps réel du type avionique surtout lorsque les applications sont écrites en langage de haut niveau tel que le langage ADA.

Pour assurer cette gestion d'exécutifs à deux niveaux avec les critères de sécurité requis, l'invention propose, à partir d'une configuration logicielle réalisée à l'initialisation du "rack" ou du processeur et d'une référence temporelle commune au "rack" et cycliquement recalée par synchronisation, un ensemble d'automates réunis sous la forme d'un coprocesseur unique associé à chaque processeur capable d'offrir des services pour la gestion par tranche de temps des fonctions (attribuées à l'"Exécutif Séquenceur") mais également, par fonction, des services que l'on attribue plus classiquement sur un noyau d'exécutif à "l'Exécutif Application".

Les deux niveaux d'exécutifs s'appuient alors sur les services fournis par le coprocesseur lorsqu'une primitive est demandée.

Pour les événements matériels globaux au "rack" ou au module et internes comme la gestion du temps, le coprocesseur alerte le bon niveau d'exécutif lorsqu'une action au niveau des tâches est nécessaire. Ainsi, une partie des traitements, outre l'algorithmique des primitives est transparent pour le processeur.

Le coprocesseur dispose à cet effet, de l'ensemble des informations liées au temps réel global du processeur comme les états des fonctions, les états des événements globaux, les durées des tranches temporelles mais égaiement des états de tous les objets temps réel manipulés par toutes les tâches de toutes les fonctions implantées sur le processeur. Toutefois, il existe un partitionnement physique dans le composant qui assure une ségrégation entre les objets temps réel propres à chaque fonction.

Le coprocesseur se présente sous la forme d'un composant connecté, d'une part, au BUS mémoire local du processeur associé et, d'autre part, au BUS mémoire dit d'échange, (ces BUS mémoire pouvant être des BUS 32 bits).

Il fonctionne sur le BUS mémoire locale suivant deux modes :
- en mode esclave, il est vu par le processeur comme de la mémoire ; ce mode est utilisé pour l'exécution de primitive ou demande de service au coprocesseur qui se traduit par des écritures et des lectures successives à l'adresse du coprocesseur ;
- en mode maître, il prend la possession du BUS local pour aller lire ou écrire des informations dans la mémoire locale ; ce mode est utilisé pour les opérations de recopie qui sont détaillées plus loin.

Il fonctionne sur le BUS mémoire d'échange en mode maître.

Il prend la possession du DUS mémoire d'échange pour aller lire ou écrire des informations en mémoire d'échange pour la recopie par exemple ou dans le composant interface BUS fond de panier.

Ces accès se font :
- soit par recopie de bloc de mémoire dont l'initialisation est de la responsabilité du processeur mais dont les échanges se font sous la responsanilité et l'initiative du coprocesseur par vol de cycle au processeur,
- soit par le processeur en passant au travers du coprocesseur qui agit alors seulement pour prendre le contrôle du BUS mémoire d'échange.

Il offre des services à l'"Exécutif Séquenceur" pour assurer la gestion par tranche de temps des fonctions.

Il offre également des se±vices aux "exécutifs d'Application".

Ces services demandés sous forme de primitive par le processeur permettent d'assurer l'enchaînement temps réel d'une fonction à l'intérieur d'une tranche de temps.

Les différents automates du coprocesseur liés aux services du ou des "exécutifs Application" sont communs pour toutes les applications. Par contre, les tables de status temps réel comme les états des tâches, les états des sémaphores, des événements, etc..., sont partitionnés par tranche de temps. Ainsi, la sécurisation des informations temps réel propres à chaque application est assurée.

Pour la commutation de fonction à la fin des tranches temporelles, le composant coprocesseur peut fonctionner suivant deux modes.

Le premier mode est utilisé lorsque seul le coprocesseur entretient la gestion de l'heure système ou "rack".

Dans ce cas, en fonction de sa configuration chargée à l'initialisation par logiciel, le coprocesseur génère une interruption à destination du processeur à la fin de chaque tranche de temps pour lui signaler qu'il doit abandonner la fonction en cours pour prendre celle indiqué par le coprocesseur. Cela permet au processeur d'assurer le chargement cohérent des tables de l'unité de gestion mémoire.

Cette interruption est générée à partir d'un compteur contenu dans le coprocesseur et qui est réinitialisé à la fin de chaque tranche de temps par la durée de la tranche suivante à partir d'une table interne (configurée à l'initialisation du processeur).

Sur la réception de l'interruption :
- le processeur exécute une séquence de code qui lui permet de sauvegarder le contexte machine minimum de la fonction en cours pour une reprise correcte, à la prochaine tranche de temps associée ;
- il envoie ensuite un message au coprocesseur pour lui signaler qu'il est prêt à recevoir le numéro de la fonction nouvellement active ainsi que la tâche la plus prioritaire à exécuter appartenant à cette fonction ;
- le processeur effectue alors un rechargement de contexte machine lié à l'activation de la fonction et à l'élection de la tâche en question ; le contexte de la tâche a pu être sauvegardé à la fin de la dernière tranche de temps relative à la fonction nouvellement réveillée.

Le coprocesseur recharge le compteur de tranche par la valeur contenue dans la table interne correspondant à la fonction activée. Les états des objets temps réel manipulés par la fonction désactivée ne sont plus alors accessibles par le processeur sauf cas particulier.

Pour fonctionner suivant ce mode, il est nécessaire que chaque coprocesseur du "rack" soit muni d'un dispositif de synchronisation pour entretenir une heure système commune à tous les coprocesseurs pour assurer des synchronisations de changement de tranche sur différents modules.

A partir de l'initialisation du "rack", chaque coprocesseur observe et émet sur une ligne horloge commune via un "OU câblé".

L'émission est faite via un interface.

A chaque période d'horloge, chaque coprocesseur attend le coprocesseur le plus en retard pour sa génération d'horloge.

Sur la remonté du signal d'horloge le plus en retard, tous les coprocesseurs synchronisent leur horloge.

La période d'horloge résultante de cette synchronisation est comparée par rapport à deux références de temps "valeur minimale, valeur maximale".

Tous les coprocesseurs qui détectent une période horloge ainsi obtenue en dehors de la fenêtre, le signalent à leur processeur par une interruption et invalide l'interface qui émet leur horloge sur la ligne commune.

Par l'intermédiaire de cette horloge, on reconstitue une heure système commune à tous les modules du "rack".

Le deuxième mode est celui où la référence temporelle est gérée par le composant interface BUS fond de panier. Dans ce cas, le changement de tranche est commandé par ce composant qui alerte le processeur par une interruption. Le processeur exécute ensuite une primitive qui commande au coprocesseur de changer d'application. Le coprocesseur contrôle alors que le changement de tranche est bien à l'intérieur d'une fenêtre temporelle. Chaque changement de tranche est ainsi contrôlée par rapport à des références chargées dans le coprocesseur par logiciel à l'initialisation.

Pendant une tranche de temps, le dispositif ne gère que l'ensemble ou une partie (cas de services complémentaires exécutés par logiciel) des objets temps réel de la fonction associée à la tranche.

Le coprocesseur manipule deux temps :
- le temps local à la fonction qui est gelé dès lors que la tranche temporelle associée est terminée et réactivé à la prochaine tranche accordée ;
- le temps global au système qui est décompté en permanence.

Les objets temps réel manipulés par le dispositif et par tranche de temps, sont au minimum, les suivants :
- les tâches,
- les événements,
- les sémaphores à compteur,
- les boîtes aux lettres,
- les délais,
- les cycles.

### Les tâches

Une tâche est un programme appartenant à une fonction, programme à exécuter sur un processeur pour permettre la réalisation d'un travail pour cette fonction.

Pour commencer ou continuer son exécution, une tâche peut rencontrer des conditions temporelles, matérielles ou logicielles. Une condition fondamentale est d'avoir le processeur disponible, compte tenu des priorités à l'intérieur de la fonction pour le déroulement de la tâche.

Une tâche peut prendre différents états durant un cycle application. Ces états sont définis par un graphe de transition d'état et les transitions sont conditionnées par l'exécution des primitives rencontrées, des événements externes et des événements temporels internes au coprocesseur.

Une tâche possède des attributs qui la caractérisent et qui conditionnent également son déroulement :
- numéro de priorité dans la fonction,
- numéro de tranche de temps active,
- durées d'exécution, d'échéance et de réactivation.

La tâche peut être placée dans les six états suivants :
- Tâche morte
   Une tâche morte est une tâche connue de l'application mais qui n'a pas d'attache avec son contexte de lancement. Lors d'une anomalie jugée grave, une ou des tâches peuvent ne plus pouvoir s'exécuter. Elles sont alors placées dans l'état "morte" et ne sont plus gérées.
- Tâche dormante
   La tâche possède tous les paramètres pour démarrer son application. C'est l'état normal d'une tâche ayant terminée sont exécution ou venant d'être initialisée.
- Tâche éligible
   Une tâche éligible est une tâche en attente de ressource active. Elle peut s'exécuter dès que l'ordonnanceur décide de lui attribuer le processeur.
- Tâche élue
   Une tâche qui a obtenu la possession du processeur passe de l'état éligible à l'état élue.
   Elle peut être préemptée au profit d'une autre tâche suivant les critères choisis pour l'ordonnancement. Si la tâche rencontre au cours de son exécution une primitive de suspension inconditionnelle ou une condition non satisfaite la concernant sur délai, sur écriture dans une boîte aux lettres pleine, sur lecture dans une boîte aux lettres vide ou sur événement, elle abandonne le processeur au profit d'une autre tâche.
- Tâche suspendue
   Une tâche élue qui rencontre une condition précitée non satisfaite se place dans l'état suspendue.
   Cette tâche passe dans l'état éligible quand la condition est remplie.
   Une tâche peut être suspendue sur :
   - délai,
   - sémaphore occupé,
   - écriture dans boîte aux lettres pleine,
   - lecture dans boîte aux lettres vide,
   - événement,
   - cycle, ou
   - inconditionnellement.
- Tâche gelée
   Une tâche est placée dans l'état gelée lorsque la fonction à laquelle elle appartient, est inactive.
   Dès que la tranche de temps allouée à la fonction est terminée, toutes les tâches associées à cette fonction quittent leur état et passent dans l'état gelée. Lorsqu'à nouveau, une tranche de temps est allouée à cette fonction, toutes les tâches gelées correspondantes retrouvent leur état antérieur sauf si pendant leur état gelée, des événements globaux ou des expirations de délais globaux sont survenus et que des tâches attendaient ces événements ou l'expiration de ces délais.
   Ces tâches gelées dans l'état suspendue sur ces événements, passent dans l'état éligible à l'activation de la fonction.

Du point de vue du noyau de l'"Exécutif Application", une tâche peut être dans les deux états fondamentaux suivants :
- elle est active si elle est en cours d'exécution sur le processeur,
- elle est en attente dans le cas contraire.

A ce titre, elle peut être en attente d'un événement si elle a sous-traité une opération à un autre élément de la configuration et attend que celle-ci soit terminé.

Elle peut être en attente d'une ressource au sens général, si elle a besoin pour poursuivre d'une unité matérielle ou logicielle qui n'est pas disponible.

Une ressource peut être vue comme un composant logiciel ou matériel d'un système informatique pouvant être allouée à une seule tâche, cas de la ressource simple gérée via les sémaphores binaires, ou à plusieurs tâches, cas de la ressource à compteur gérée via les sémaphores à compteur ; une ressource est alors préemptible sous le contrôle de l'"Exécutif Application" dès lors qu'elle est libérée par la tâche possesseur pour la ressource simple, ou libérée par une des tâches possesseur pour la ressource à compteur.

Seul le temps absolu géré par le coprocesseur concerne toutes les fonctions.

L'"Exécutif Séquenceur" ne connaît que deux états pour les fonctions :
- actif pour la fonction associée à la tranche de temps en cours,
- non actif pour toutes les autres fonctions.

### Les événements

L'événement est un mécanisme qui assure la synchronisation soit entre une ou des tâches et l'environnement extérieur, soit entre plusieurs tâches.

Lorsque l'événement arrive, les tâches en attente de cet événement peuvent continuer leur exécution sous certaines conditions (processeur disponible, pas d'autre attente, ...).

Les événements sont :
- soit logiciels, l'apparition de l'événement est déclenché par l'exécution C'une primitive dans une tâche ou un programme d'interruption,
- soit matériels, l'apparition de l'événement est déclenché par un signal physique externe ou interne au composant.

Les signaux physiques externes peuvent être des événements globaux ou des événements locaux.

Ils peuvent provoquer un traitement interne au coprocesseur qui consiste à positionner toutes les tâches en attente de cet événement dans l'état éligible. Toutes les tâches en attente de ces événements arrivés dont la fonction associée n'est pas active, passent de l'état gelée et suspendue à l'état gelée et éligible. C'est seulement à l'activation de leur fonction qu'elles pourront prendre possession du processeur si elles sont prioritaires.

### Les sémaphores

Le coprocesseur manipule des sémaphores à compteur.

Le sémaphore à compteur est utilisé pour la gestion partagée de ressource commune à nombre de possesseurs limités.

### Les boîtes aux lettres

Le coprocesseur gère les boîtes aux lettres. Il contrôle par les primitives qu'il offre, la saturation sur les écritures de message sur boîte pleine et les lectures de message sur boîte vide.

La boîte aux lettres est un mécanisme courant utilisé pour la communication asynchrone intertâche dans une fonction.

### Le temps

L'horloge temps réel, référence dans un contrôle de processus, est utilisée pour assurer un déroulement correct de la fonction et le respect des contraintes temporelles liées à l'environnement.

Le temps, géré par le coprocesseur permet entre autre, de marquer les attentes sur délais ou d'activer les tâches après délais. Dans le cas d'une tâche suspendue sur délai, l'échéance de ce délai fait passer cette tâche dans l'état éligible.

La gestion du temps absolu permet de partitionner le temps en tranches associées aux différentes fonctions.

Il permet ainsi de geler les contextes temps réel locaux aux différentes fonctions implantées sur le processeur.

Sur le temps local ou global, les services tels que les suspensions de tâches sur délai, les attentes d'événement ou de ressources bornées temporellement sont assurés.

### Les cycles

Une tâche déclarée cyclique est une tâche qui est réactivée automatiquement par le coprocesseur toutes les N fois que l'application à laquelle elle appartient passe de l'état inactif à l'état actif.

Les principales primitives accessibles par le ou les exécutifs application sont énoncées ci-après, étant entendu que cette liste n'est pas figée et qu'elle pourra évoluer en fonction des besoins ultérieurs.

### Primitives associées aux tâches

- Activer :
   Fait passer la tâche de l'état dormante à l'état éligible.
- Activer-sur-événement :
   Fait passer la tâche de l'état dormant à l'état en attente d'événement, si l'événement est non arrivé. La tâche passera dans l'état éligible lors de l'arrivée de l'événement.
   Il est possible de réactiver la tâche à chaque occurrence de l'événement dans la mesure où la précédente exécution est terminée (équivalent à exécuter Activer-sur-événement après chaque terminaison de la tâche).
- Activer-après-délai :
   Fait passer la tâche de l'état dormant à l'état en attente de délai. La tâche passera dans l'état éligible à l'expiration du délai.
- Activer-après-délai-depuis-début-de-la prochaine tranche :
   Même fonction que Activer-après-délai mais le délai ne commence à être décrémenté que sur l'interruption de début de la prochaine tranche associée à la fonction.
- Activer-cycliquement :
   La tâche est réveillée toutes les N occurrences de l'application à laquelle elle appartient, et ceci au bout d'un délai D à partir de l'interruption de début de tranche.
- Se terminer :
   Fait passer la tâche en cours dans l'état dormant.
   Supprime le caractère "cyclique" ou "réactivable automatiquement sur événement" de la tâche.
- Tuer :
   La tâche précisée passe de n'importe quel état à l'état morte.
- Attente-de-réactivation :
   La tâche en cours passe dans l'état "dormant - en attente de réactivation".
- Supprimer-réactivation :
   La tâche perd le caractère "cyclique" ou "réactivable automatiquement sur événement", mais reste en cours si elle l'était.
- Priorité :
   La tâche prend comme nouveau niveau de priorité celui précisé en paramètre.
- Suspendre :
   Interdit le passage de la tâche à l'état en cours mais ne modifie pas son état.
- Reprendre :
   Autorise à nouveau le passage de la tâche à l'état en cours, pour le cas où il aurait été interdit par la primitive Suspendre.
- Suspendre-avec-délai :
   Interdit le passage de la tâche à l'état en cours jusqu'à échéance du délai ou exécution de la primitive Reprendre.
- Consulter :
   Permet de connaître tous les paramètres caractérisant l'état de la tâche.
- Réactiver :
   Fait passer la tâche de n'importe quel état à l'état éligible (supprime toutes les conditions d'attente).

### Primitives associées aux événements logiciels

- Positionner :
   Place l'événement dans l'état arrivé et fait passer les tâches en attente de cet événement dans l'état éligible.
- Effacer :
   Place l'événement dans l'état non arrivé.
- Signaler :
   Créé une impulsion sur l'événement : les tâches en attente de cet événement passent dans l'état éligible, mais l'événement repasse immédiatement à l'état non arrivé.
- Attendre :
   Fait passer la tâche en cours dans l'état : en attente d'événement. L'arrivée de l'événement fera passer :a tâche dans l'état éligible. Si un délai de protection est précisé, la tâche deviendra éligible à l'échéance du délai, dans le cas où l'événement n'est pas arrivé.

### Primitives associées aux événements matériels

- Positionner :
   Positionne au niveau haut la sortie correspondante.
- Effacer :
   Positionne au niveau bas la sortie correspondante.
- Signaler :
   Génère une impulsion sur sortie correspondante.
- Attendre :
   Fait passer la tâche en cours dans l'état : en attente d'événement matériel. Le passage au niveau haut de l'entrée correspondante fera passer la tâche dans l'état éligible. Si un délai de protection est précisé, la tâche deviendra éligible à l'échéance du délai, si l'entrée n'est pas passée à l'état haut avant.

### Primitives associées aux sémaphores

- Réserver :
   Demande de réservation d'un point d'entrée du sémaphore. S'il n'existe plus de point d'entrée libre, la tâche en cours passe dans l'état : en attente de sémaphore, sinon elle reste dans l'état en cours. Dans le cas où un délai de protection est précisé : si la tâche n'a pas obtenu l'accès au sémaphore à l'échéance du délai, la tâche repasse à l'état éligible et est supprimée de la file d'attente du sémaphore (abandon).
- Libérer :
   Libère un point d'entrée du sémaphore : entraîne éventuellement le réveil (c'est-à-dire le passage à l'état éligible) d'une tâche en attente sur ce sémaphore.
- Consulter :
   Permet de connaître le nombre de points d'entrée libres du sémaphore, le nombre de tâches en attente.
- Initialiser :
   Permet d'initialiser le sémaphore.

### Primitives associées aux boîtes aux lettres

- Déposer :
   Demande de dépôt d'un message dans la boite. Si la boîte est pleine, la tâche en cours passe dans l'état : en attente d'écriture sur boîte-aux-lettres, sinon elle reste dans l'état en cours et le message est recopié de l'adresse d'origine vers la boîte. Si la tâche dépose un message dans une boîte vide, elle entraîne éventuellement le réveil (c'est-à-dire le passage à l'état éligible) d'une tâche en attente de lecture dans cette boîte. Dans le cas où un délai de protection est précisé : si la tâche n'a pas obtenu l'accès en écriture à la boîte à l'échéance du délai, la tâche repasse à l'état éligible et est supprimée de la file d'attente sur la boîte (abandon).
- Extraire :
   Demande de lecture (avec extraction) d'un message dans la boîte. Si la boîte est vide, la tâche en cours passe dans l'état : en attente de lecture sur boîte-aux-lettres, sinon elle reste dans l'état en cours et le message est transféré de la boite vers l'adresse de destination. Si la tâche extrait un message dans une boite pleine, elle entraîne éventuellement le réveil (c'est-à-dire le passage à l'état éligible) d'une tâche en attente d'écriture dans cette boite. Dans le cas où un délai de protection est précisé : si la tâche n'a pas obtenu l'accès en lecture à la boîte à l'échéance du délai, la tâche repasse à l'état éligible et est supprimée de la faible d'attente sur la boîte (abandon).
- Consulter :
   Permet de connaître le nombre de messages déposés dans la boite, le nombre de tâches en attente de lecture ou d'écriture dans la boite.
- Initialiser :
   Permet d'initialiser la boite.

### Primitives associées au temps

- Attente-d'un-délai :
   Fait passer la tâche en cours dans l'état : en attente de délai. La tâche passera dans l'état éligible à l'expiration du délai.
- Attente-d'un-délai-depuis-début-de-tranche :
   Même fonction que Attente-d'un-délai mais le délai ne commence à être décrémenté que sur l'interruption de début de la prochaine tranche associée à la fonction à laquelle la tâche appartient.
- Lecture-heure-absolue :
   Permet de lire la valeur du compteur de l'heure absolu.
- Démarrer-et-charger-temps-d'échéance :
   Permet de charger le compteur de temps d'échéance d'une tâche et de valider son décomptage.
- Arrêter-temps-d'échéance :
   Permet de stopper le décomptage du temps d'échéance d'une tâche. Renvoie la valeur courante du compteur.
- Consulter-temps-d'échéance :
   Permet de lire la valeur du compteur de temps d'échéance d'une tâche.
- Démarrer-et-charger-temps-d'exécution :
   Permet de charger le compteur de temps d'exécution d'une tâche et de valider son décomptage.
- Arrêter-temps-d'exécution :
   Permet de stopper le décomptage du temps d'exécution d'une tâche.
- Consulter-temps-d'exécution :
   Permet de lire la valeur du compteur de temps d'exécution d'une tâche.

### Autres primitives

- Verrouiller ordonnanceur/déverrouiller ordonnanceur :
   Ces deux primitives -permettent de verrouiller et de déverrouiller l'ordonnanceur "scheduler" dans le coprocesseur.
   Il est ainsi possible d'effectuer une série de primitives sans remise en cause de la tâche en cours.
- Recopie :
   Le coprocesseur gère une primitive de recopie.
   Cette primitive permet de faire des transferts de bloc de taille paramétrable d'une mémoire source à une mémoire destination dont les adresses sont précisées en paramètre.
   La source et la destination peuvent se trouver indifféremment dans la mémoire locale ou la mémoire d'échange.
   Le transfert du bloc peut se faire en verrouillant le ou les BUS requis pour le transfert pour garantir la cohérence de toutes les données du bloc.
   Il est possible d'effectuer une "checksum" en ligne et de la vérifier par rapport à la référence qui est le dernier mot à transmettre.
- Validation-exceptions :
   Après avoir signalé une exception au processeur, le coprocesseur verrouille l'émission d'autres exceptions vers le processeur. L'exécution de la primitive Validation-exceptions déverrouille l'émission d'exceptions.
- Fin-initialisation-application :
   Positionne à 1 le "booléen" interne au coprocesseur marquant la fin de la phase d'initialisation de l'application. Certaines primitives ne sont plus autorisées quand ce "booléen" est à 1 (primitives d'initialisation des boîtes, sémaphores...). Seul un "RESET" peut faire repasser ce "booléen" à 0.
- "Reset-application" :
   Remet dans le même état qu'après une montée d'alimentation tous les objets appartenant à une application (tâches et compteurs associés, boîtes, sémaphores...).

### Contrôles temporels associées aux tâches

A chaque tâche de chaque application correspond une série de compteurs qui permettent de contrôler temporellement l'exécution et la réactivation de celles-ci.

Ainsi, le temps d'activation, le temps de possession réel du processeur et le temps entre deux activations sont contrôlés.

En cas de dépassement, une interruption est générée vers le processeur pour signaler l'anomalie.

Les primitives associées à la gestion par tranche (accessibles uniquement par l'exécutif séquenceur) comprennent des primitives accessibles uniquement pendant l'initialisation et des primitives accessibles pendant et après la phase d'initialisation.

Les primitives accessibles uniquement pendant l'initialisation comprennent :
a) des primitives accessibles dans le cas d'une gestion interne des changements de tranche telles que la primitive :
   - Programmation-séquencement-appli :
      Définit l'ordre d'appel des applications et le temps affecté à chacune d'elles. La durée totale du cycle doit être supérieure ou égale à la somme des durées des applications. Si elle est supérieure, un temps libre (= sans application) est réservé en fin de cycle.
b) des primitives accessibles dans le cas d'une gestion externe des changements de tranche, telles que les primitives :
   - Programmation-"timer"-durée-appli :
      Pour chacune des applications, un "timer" permet de contrôler, à chaque cycle, la durée de la tranche de temps affectée à l'application.
      La durée passée en paramètre est le temps minimal que doit durer la tranche pour l'application précisée. Si un changement d'application intervient alors que l'application précédente n'a pas écoulé son temps minimum, une exception sera signalée à l'exécutif séquenceur.
   - Programmation-"timer"-fréquence-appli :
      Pour chacune des applications, un "timer" permet de contrôler que le temps entre deux appels successifs de l'application ne dépasse pas une certaine valeur.
      La durée passée en paramètre est la durée maximale qui doit s'écouler entre deux appels successifs de l'application précisée.
c) et des primitives accessibles quelle que soit la gestion, telles que les primitives :
   - Programmation-heure-absolue : Programmation de l'heure absolue à une valeur donnée.
   - Fin-initialisation : Positionne le "booléen" interne au coprocesseur marquant la fin de la phase d'initialisation des données de l'exécutif séquenceur. Certaines primitives ne sont plus autorisées quand ce "booléen" a été activé. Seul un RESET peut faire repasser ce "booléen" à l'état inactif (RESET matériel ou primitive RESET-composant).

Les primitives accessibles pendant et après la phase d'initialisation comprennent :
a) dans le cas d'une gestion externe des changements de tranche, des primitives telles que :
   - Changement-d'application :
      L'application en cours est suspendue, l'application précisée en paramètre est activée.
b) primitives accessibles quelle que soit la gestion, telles que :
   - "Reset-composant" :
      Remet dans le même état qu'après une montée d'alimentation tous les objets du coprocesseur.

Bien entendu, la liste des primitives peut évoluer au gré du concepteur des applications en fonction du noyau implanté et des performances dont il souhaite disposer.

Les transitions possibles entre les différents états que peut prendre une tâche, sont conditionnées par l'exécution de primitives, par des événements externes (événements matériels, RESET), ou par des événements internes (arrivée à échéance d'un délai). Certaines transitions sont gérées par l'ordonnanceur uniquement : transitions entre l'état ELIGIBLE et ELUE. Le choix de la tâche élue dépend de la priorité des tâches éligibles, et de l'exécution des primitives Suspendre et Reprendre sur certaines de ces tâches...

Toutes les tâches sont dans l'état DORMANTE après un RESET.

Il est possible de passer de l'état DORMANTE :
- à l'état ELIGIBLE par les primitives Activer et Activer-cycliquement, ou par réactivation automatique (pour les tâches ayant été activées avec le paramètre Répétition = Oui, et pour les tâches cycliques),
- à l'état SUSPENDUE par les primitives de type "activer sur condition" (Activer-sur-événement, Activer-après-délai),
- à l'état MORTE par la primitive Tuer.

Il est possible de passer de l'état ELIGIBLE :
- à l'état ELUE sur décision de l'ordonnanceur uniquement,
- à l'état MORTE par la primitive Tuer.

Il est possible de passer de l'état ELUE :
- à l'état ELIGIBLE sur décision de l'ordonnanceur (préemption),
- à l'état SUSPENDUE par les primitives de type "attendre une condition" (Attendre(événement-logiciel), Attendre(événement-matériel), Réserver(sémaphore), Déposer(boite), Extraire(boîte), Attente-d'un-délai),
- à l'état DORMANTE par la primitive Se-terminer,
- à l'état MORTE par la primitive Tuer.

Il est possible de passer de l'état SUSPENDUE :
- à l'état ELIGIBLE par la fin de la condition d'attente (arrivée de l'événement, libération du sémaphore, extraction d'un message dans la boîte, dépôt d'un message dans la boîte, arrivée à échéance du délai),
- à l'état MORTE par la primitive Tuer.

Il convient d'insister, à ce sujet, sur le fait que l'appel à l'ordonnanceur en vue d'attribuer le processeur à une tâche éligible ne peut s'effectuer que :
- sur une transition d'état "suspendue" à "éligible" d'une tâche,
- sur une transition d'état "dormante" à "éligible" d'une tâche,
- sur une transition "élue" à "dormante" d'une tâche,
- sur une transition "élue" à "morte" d'une tâche,
- sur une transition "élue" à "suspendue" d'une tâche,
- sur une transition "élue" à "élue et gelée" d'une tâche correspondant à la fin d'une tranche,
- sur un début de tranche.

Un mode de réalisation de l'invention sera décrit ci-après, à titre d'exemple non limitatif, avec référence aux dessins annexés dans lesquels :
La figure 1 représente schématiquement une architecture multiprocesseurs utilisant des coprocesseurs selon l'invention ;
La figure 2 représente le découpage temporel pour les exécutions successives des applications de manière cyclique avec les temps locaux et le temps global ;
La figure 3 est une représentation schématique de l'architecture d'un composant coprocesseur selon l'invention ;

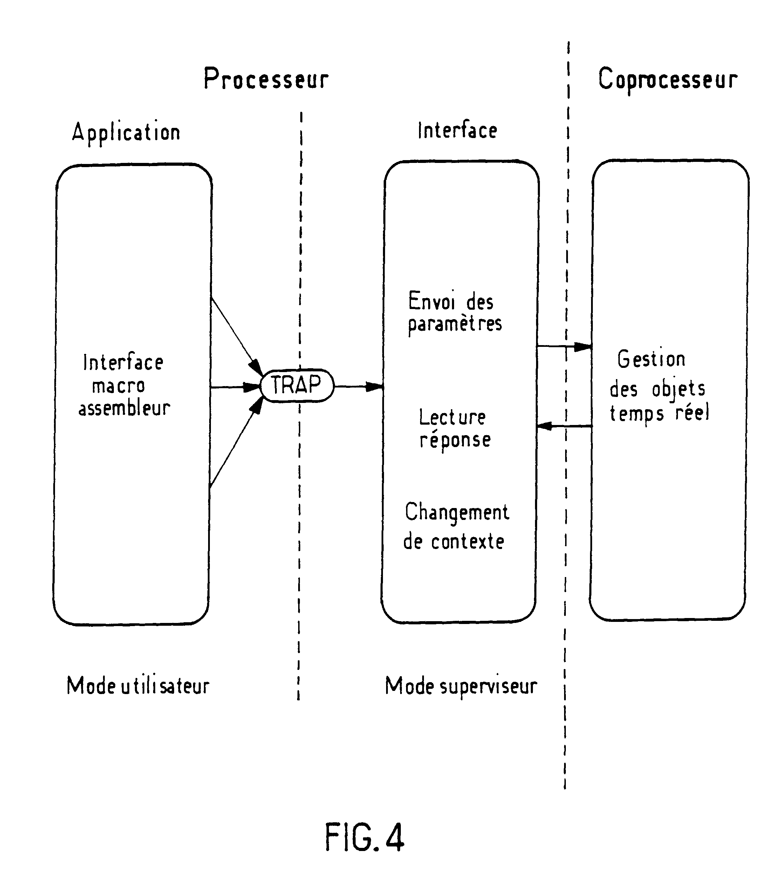

La figure 4 est une représentation schématique de l'interface application/Exécutif Application/coprocesseur.

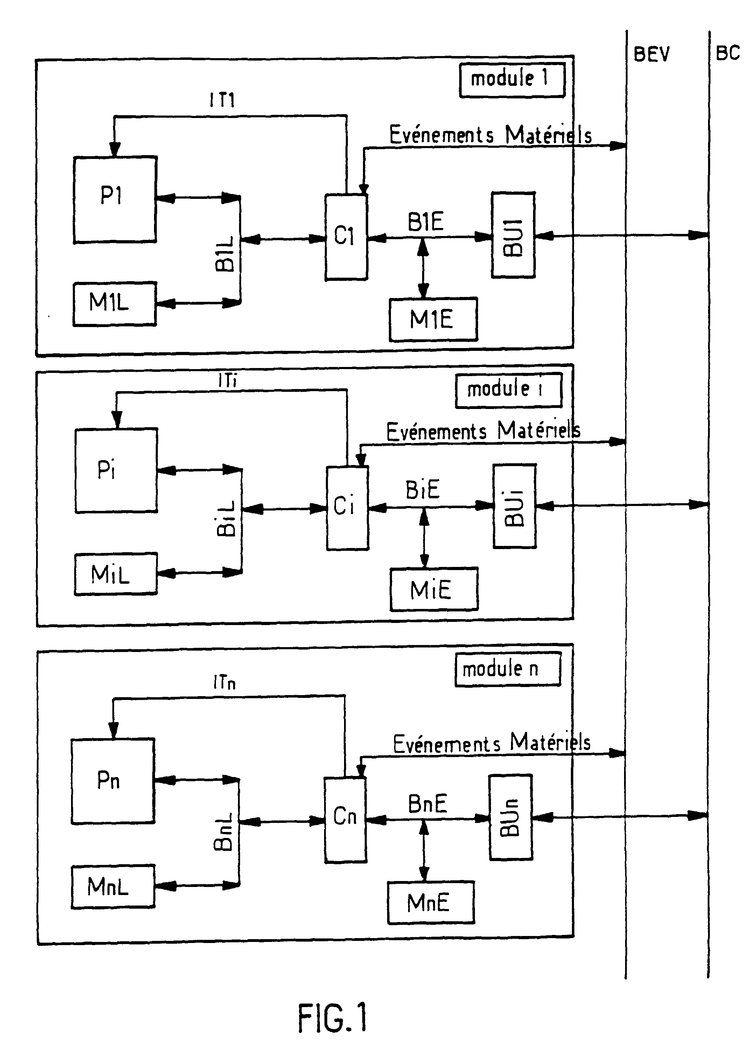

L'architecture représentée sur la figure 1 fait intervenir une pluralité de modules (module 1, module i, module n) comportant chacun un processeur (P1, Pin, Pn) relié à une mémoire locale (M1L, MiL, MnL) par l'intermédiaire d'un BUS mémoire local (B1L, BiL, BnL) et connecté à un BUS commun à la structure BC.

Cette connexion au BUS BC s'effectue par l'intermédiaire d'un coprocesseur C1, Ci, Cn selon l'invention qui est connecté :
- au BUS mémoire local (B1L, BiL, BnL),
- à un BUS d'échange local (B1E, BiE, BnE) relié à une mémoire d'échange locale (M1E, MiE, MnE) et au BUS commun BC, par l'intermédiaire d'un interface BU1, BUi, BUn, et
- au processeur Pi grâce à une ligne de transmission des signaux d'interruption et à un BUS d'événements matériels BEV commun à tous les modules.

Chaque coprocesseur C1, Ci, Cn qui comporte des automates de séquencement et une logique câblée spécifique, agit vis-à-vis du processeur P1, Pi, Pn auquel il est rattaché comme un coprocesseur temps réel indépendant du type de processeur et du langage de haut niveau de programmation utilisé par ce dernier.

Il est destiné à fournir des services temps réel de bas niveau et des services de communication avec la fonction interface du BUS commun BC (BUS fond de panier), avec des performances optimisées dans un environnement multifonctions à gestion par tranche de temps processeur.

Il peut assurer à cet effet la gestion temporelle des tranches de temps, donc des services utilisables par l'"Exécutif Séquenceur" au niveau du processeur et la fourniture de services temps réel utilisables par le ou les exécutifs d'application pour toutes les fonctions implantées sur le processeur tout en assurant une ségrégation des objets manipulés par ces différentes fonctions.

Il se comporte, vu du processeur associé, comme une zone de mémoire locale. Il possède l'électronique nécessaire pour la reconnaissance d'adresse, l'émission et la réception des données à traiter et la génération des signaux de contrôle de ses échanges avec le processeur associé (via le BUS B1L, BiL, BnL ), avec la mémoire d'échange (M1E, MiE, MnE) ou le BUS commun BC, avec la mémoire locale (M1L, MiL, MnL) et avec le BUS événement commun BEV.

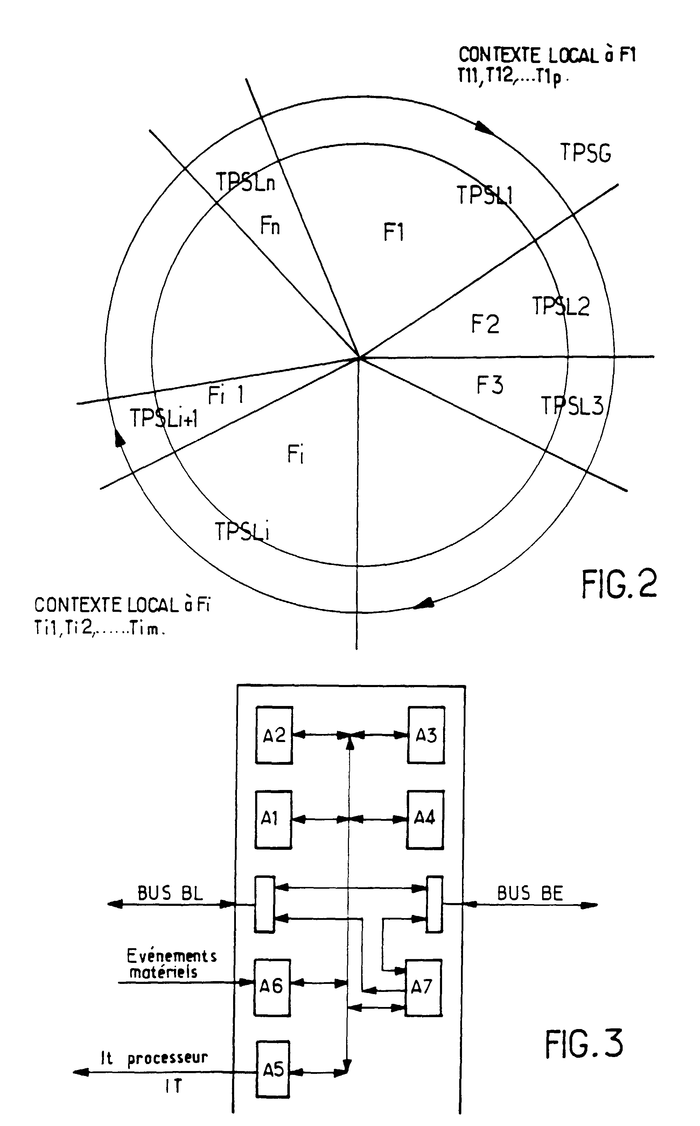

Ce coprocesseur C1, Ci, Cn comprend par ailleurs des moyens permettant de gérer par tranches de temps T1, T2 ..., TN de durée variable mais cycliquement reproduite, les objets temps réel composés de tâches, des événements matériels et/ou logiciels, des sémaphores, des boîtes aux lettres et du temps local à la fonction (TPSL1, TPSL2... TPSLi... TPSLn) et global (TPSG) ou temps absolu, objets gérés par un ou des noyaux pouvant être différents par tranche de temps, donc par fonction (F1, F2... Fi... Fn), ainsi que des moyens de traitement desdites primitives ne pouvant manipuler que les objets associés à la fonction correspondant à la tranche de temps active (figure 2).

Ce coprocesseur (C1, Ci, Cn) comporte en outre des mécanismes et des liens de communication entre les différents processeurs de la structure pour assurer une synchronisation temporelle afin de gérer une heure absolue (ou système) commune à tous les processeurs de la structure pour assurer des changements de tranche synchrones et la diffusion d'événements temps réel critiques à tous ces processeurs via le BUS évènement BEV, et un ordonnanceur apte à gérer le contexte des tâches relatives à la tranche de temps active, le coprocesseur décidant le passage d'un état à un autre de ces tâches en fonction des primitives et du contexte temps réel local à la fonction.

Il peut interrompre le processeur lorsqu'une tâche plus prioritaire que la tâche en cours est élue. Ceci se fait par l'émission d'une interruption vers le processeur associé par la liaison IT1, ITi, ITn, le coprocesseur se mettant ensuite en attente d'échange jusqu'à ce que le processeur soit à même de recevoir les paramètres de la nouvelle tâche à exécuter.

Le coprocesseur est composé d'au moins trois automates, à savoir :
- un premier automate spécialisé dans la gestion des échanges entre le coprocesseur, avec le processeur, avec la mémoire locale MiL, avec la mémoire d'échange MiE, avec le BUS commun BC, avec le BUS d'échange local BiE et avec le BUS événement matériel (BEV) ;
- un deuxième automate spécialisé dans la gestion des fonctions lors des échéances de tranche de temps ;
- un troisième automate pour la gestion de certains objets temps réel liés à la fonction active sur la tranche de temps en cours, en particulier la gestion des files des tâches éligibles en attente du processeur, la gestion du temps local tel que les délais, la gestion des files d'attente pour les boîtes aux lettres et sémaphores, des tâches en attente d'événements globaux ou locaux et la prise en compte des interruptions externes.

Ces automates communiquent entre eux par un BUS interne au composant, les primitives relatives aux événements globaux étant diffusées sur le BUS événement matériel.

Chaque composant coprocesseur dispose de mécanismes assurant la ségrégation des objets temps réel propres aux différentes fonctions gérées sur le processeur auquel ce composant est associé.

Chaque coprocesseur dispose de mécanismes assurant la commutation d'une fonction à une autre fonction correspondant à la fin d'une tranche de temps allouée à la fonction abandonnée et à une nouvelle tranche de temps allouée à la fonction nouvellement traitée.

L'abandon d'une fonction a pour effet de geler l'ensemble du contexte temps réel de la fonction abandonnée, donc de faire passer l'ensemble des tâches de la fonction dans l'état gelée, de bloquer l'ensemble des informations relatives au temps local de la fonction sans pour autant bloquer les informations relatives au temps global ni aux événements globaux.

Tout événement relatif au temps global n'a d'effet que lors de la reprise de la fonction lorsqu'une nouvelle tranche de temps est accordée à la fonction concernée de même que pour les événements globaux diffusés sur le BUS (BEV).

Le coprocesseur dispose en plus d'automates de recopie pour effectuer des transferts de données indépendamment de l'exécution du processeur entre une mémoire source et une mémoire destination, la mémoire source pouvant être la mémoire d'échange ou la mémoire locale du processeur et la mémoire destination la mémoire locale ou la mémoire d'échange. Le transfert de blocs d'information pouvant se faire en bloquant les BUS utilisés pour le transferr, ceci pour assurer la cohérence des données composant le bloc.

Comme on peut le voir sur la figure 2, le coprocesseur peut comprendre sept automates dont un est plus particulièrement destiné à la gestion du temps donc notamment les tranches temporelles et un deuxième, destiné à la gestion des échanges avec le processeur :
- l'automate communication processeur A1 peut gérer la gestion des échanges avec le processeur en particulier la distribution des traitements sur les autres automates en fonction des primitives demandées par le processeur,
- l'automate gestion du temps A2 peut gérer le temps absolu, les tranches de temps et les objets locaux liés aux fonctions relatifs au temps, c'est lui qui peut assurer la ségrégation à l'intérieur du composant des objets locaux à chaque fonction,
- l'automate sémaphore A3 peut gérer les sémaphores à compteur et les files de tâches en attente associées,
- l'automate boites aux lettres A4 peut assurer la gestion des boîtes aux lettres et les files d'attente des tâches associées,
- l'automate ordonnanceur A5 peut gérer les files d'attente des tâches éligibles et donc émettre l'interruption vers le processeur,
- l'automate événement A6 peut assurer la gestion des événements dont les tâches en attente d'événement ; il peut assurer la prise en compte des interruptions externes,
- l'automate recopie A7 peut assurer la gestion des recopies de bloc mémoire.

Chacun de ces automates comprend un séquenceur ou machine d'état et un interface avec le BUS interne au composant.

Le coprocesseur comprend un interface entre le BUS interne et le BUS local BL du module processeur.

Il comprend également un interface entre le BUS interne et le BUS d'échange BE.

Il comprend en outre des moyens pour émettre un signal d'interruption vers le processeur concerné, notamment lorsque l'ordonnanceur décide un changement de tâche sur ce processeur ou s'il détecte une anomalie par ses mécanismes sécuritaires. Ce signal reste actif tant que le processeur n'a pas accédé au coprocesseur pour lire le code de l'opération à effectuer ou identifier la cause de l'anomalie. Pour certaines primitives qui remettent en cause systématiquement la tâche en cours, c'est par la lecture du compte rendu d'exécution passé par le coprocesseur au processeur que ce dernier connaîtra la nouvelle tâche élue.

Le coprocesseur dispose d'entrées d'interruption externe ITs exts ainsi que des moyens de mise en forme et de mémorisation de ces signaux d'interruption. Ces interruptions sont traitées par rapport à la liste des objets temps réel gérés comme des événements matériels.

Dans le cadre d'une application, l'interface entre le processeur (mode utilisateur) et le coprocesseur est constitué par un exécutif (mode superviseur) selon un processus qui se trouve illustré sur la figure 3.

Pour un microprocesseur, l'entrée dans l'exécutif se fait par une instruction TRAP. Cette instruction, permettant les appels système par une application, force une exception et réalise la commutation du mode utilisateur au mode superviseur dans lequel s'exécute tout le code appartenant à l'exécutif (Application ou Common Exécutive).

Une primitive est constituée d'un groupe d'instructions, réalisant les traitements suivants :
- sauvegarde des registres nécessaires au passage des paramètres,
- chargement des paramètres dans les registres libérés, ou en mémoire RAM,
- entrée dans le moniteur TRAP,
- (exécution de la requête),
- après retour, restitution des registres utilisés.

L'exécutif étant l'interface entre le processeur et le coprocesseur, le code exécuté opère de la façon suivante :
- demande de primitive (test si le coprocesseur est libre),
- envoi du ou des paramètres.

La suite est différente selon le type de requête :
a) Requête sans réponse du coprocesseur
   - retour au programme utilisateur.
b) Requête avec réponse du coprocesseur
   - lecture du code indiquant l'opération à effectuer,
   - éventuellement, changement de tâche,
   - retour au programme utilisateur.

Il est à noter que le processeur n'est ininterruptible que pendant la phase de changement de contexte.

Tel que précédemment défini, le coprocesseur peut effectuer deux types de traitements, le premier type est déclenché à l'initiative du processeur (demande de primitive), le second type est déclenché par un événement matériel ou un événement interne au coprocesseur comme une échéance de délai, une fin de tranche, etc...

### premier type : demande de primitive

Le processeur qui désire accéder au coprocesseur pour exécuter une primitive, doit vérifier au préalable que le coprocesseur est libre car le coprocesseur ne traite qu'une seule primitive à la fois. La réponse de du coprocesseur "occupé" ou "libre" est émise de façon matérielle pour ne pas perturber l'exécution possible d'un traitement en cours sur le composant déclenchée de façon interne par un événement matériel ou temporel.

Si le coprocesseur se déclare libre, il se positionne immédiatement dans l'état occupé pour se réserver à la primitive qui est demandée par le processeur (ceci a pour effet de différer automatiquement tout traitement associé à l'arrivée d'un événement externe ou interne).

Le processeur envoie le code et les paramètres de la primitive par une simple écriture à la zone d'adressage du coprocesseur. Le traitement se réalise alors dans le coprocesseur.

Si la primitive nécessite une réponse, le processeur acquiert les informations qui lui permettront de prendre les actions correspondantes par des lectures successives dans le coprocesseur.

Si la primitive ne nécessite pas de réponse, le processeur continue l'exécution de la tâche en cours.

### deuxième type : traitement déclenché de façon interne

Lors de l'arrivée à expiration d'un délai d'attente, d'un événement matériel ou d'une fin de tranche de temps, des traitements internes au coprocesseur sont déclenchés.

Si ces événements (au sens général) remettent en cause la tâche en cours sur le processeur ou s'ils signalent que quelque chose d'anormal s'est produit, une interruption est envoyée au processeur pour le forcer à réagir. Celui-ci vient alors consulter le coprocesseur pour lire les informations nécessaires pour traiter l'événement en question.

Parmi les avantages que présente le dispositif précédemment décrit, on insistera plus particulièrement sur les suivants :
- décharge du processeur de la gestion du temps réel en offrant des temps d'exécution rapides pour les services temps réel intrafonction sur des architectures à gestion de fonctions par tranche de temps,
- décharge du processeur des opérations de transfert de blocs d'informations entre la mémoire locale et la mémoire d'échange liée aux échanges sur le BUS fond de panier du "rack",
- indépendance du type de processeur ou microprocesseur,
- réalisation matérielle embarquable (faible encombrement, faible consommation),
- facilité d'implémentation de divers noyaux à partir des primitives de base implantées,
- facilité d'interfaçage aux compilateurs de langage de haut niveau,
- sécurisation renforcée par la ségrégation des objets temps réels propres à chaque fonction et contrôles temporels fins pour toutes les tâches,
- indépendance vis-à-vis de sociétés tierces comme les fournisseurs de compilateurs ou d'exécutifs temps réel.

## Revendications

1. Procédé pour la gestion du contexte temps réel d'un système comprenant au moins un processeur apte à gérer plusieurs fonctions,
caractérisé en ce qu'il comprend la gestion par un coprocesseur associé audit processeur:
- du découpage temporel, à partir d'une trame préétablie, du cycle de traitement du processeur en tranches de durées éventuellement différentes,
- de l'affectation des tranches de temps aux différentes fonctions implantées suivant un ou des canevas préétablis, les tâches relatives à chacune de ces fonctions étant inopérantes en dehors de la tranche temporelle correspondant à cette fonction,
- de la sauvegarde, à la fin d'une tranche, du contexte machine de la fonction en cours de traitement, et ce, en vue de la reprise de cette fonction lors de la tranche subséquente qui lui est associée, et
- du chargement au début d'une nouvelle tranche, du contexte machine lié à l'activation de la fonction associée à cette tranche et qui a été précédemment sauvegardé à la fin d'une tranche antérieure correspondant à cette fonction.

2. Procédé selon la revendication 1,
caractérisé en ce que le partage des différentes ressources entre les travaux en cours, et la prise en charge des fonctions auxiliaires sont assurés par un noyau d'exécutif présentant les propriétés suivantes :
- il permet d'exécuter en simultanéité apparente plusieurs programmes, un système d'exploitation distribuant le temps du processeur d'instruction et la mémoire centrale entre des entités appelées tâches,
- il est capable d'effectuer la synthèse d'opérations complexes, la programmation de ce noyau se présentant comme une extension du langage machine du processeur, un mécanisme spécial permettant la création de primitives dont le rôle est de demander l'intervention du noyau pour exécuter des opérations complexes.

3. Procédé selon la revendication 1,
caractérisé en ce que le processeur comprend deux niveaux d'exécutif, à savoir :
- un premier niveau appelé "Exécutif Application" sur lequel s'appuie une fonction pour assurer l'ordonnancement de ses tâches par rapport au contexte temps réel et, en particulier, aux ressources et aux événements dont a besoin la fonction pour s'exécuter à l'intérieur,
- un deuxième niveau appelé "Exécutif Séquenceur" qui assure les services nécessaires au partage temporel du processeur entre les différentes fonctions implantées sur le processeur et la gestion des événements globaux.

4. Procédé selon la revendication 1,
caractérisé en ce que ledit coprocesseur assure la gestion par tranche de temps des fonctions au moyen d'un "Exécutif Séquenceur" et exécute les services demandés sous forme de primitives par le processeur en vue d'assurer l'enchaînement temps réel des fonctions à l'intérieur des tranches de temps correspondantes ("Exécutif Application") et en ce que ledit coprocesseur comprant un ordonnanceur apte à gérer ladite affectation par tranches de temps aux différentes fonctions, cet ordonnanceur gérant l'ensemble des tâches implantées sur le processeur associé, par une gestion sélective sur un groupe de tâches d'une fonction correspondant à la tranche de temps en cours sur le processeur, plusieurs groupes de tâches correspondant à plusieurs fonctions pouvant être gérés d'une façon similaire par un même coprocesseur.

5. Procédé selon la revendication 4,
caractérisé en ce que les susdits coprocesseurs fonctionnent selon deux modes de fonctionnement :
- un mode de fonctionnement de type esclave, selon lequel il est vu par le processeur comme de la mémoire, ce mode étant utilisé pour l'exécution de primitive et se traduisant par des lectures et des écritures à l'adresse du coprocesseur,
- un mode de fonctionnement de type maître, selon lequel il peut lire et écrire dans la mémoire locale du processeur.

6. Procédé selon la revendication 1,
caractérisé en ce qu'à la fin d'une tranche temporelle, le coprocesseur génère une interruption à destination du processeur pour lui signaler qu'il doit abandonner la fonction en cours pour prendre celle indiquée par le coprocesseur, et en ce qu'à la réception de cette interruption, le processeur effectue les étapes successives suivantes :
- exécution d'une séquence qui lui permet de sauvegarder le contexte machine minimum de la fonction en cours pour une reprise correcte, à la prochaine tranche de temps associée,
- l'envoi d'un message au coprocesseur pour lui signaler qu'il est prêt à recevoir le numéro de la fonction nouvellement active ainsi que la tâche la plus prioritaire à exécuter, appartenant à cette fonction,
- le rechargement d'un contexte machine lié à l'activation de la fonction et à l'élection de ladite tâche dont le contexte a pu être éventuellement sauvegardé à la fin de la dernière tranche de temps relative à la fonction nouvellement réveillée.

7. Procédé selon la revendication 6,
caractérisé en ce qu'il comprend une phase de synchronisation périodique pour l'entretien d'une heure système commune à tous les coprocesseurs pour permettre la synchronisation des changements de tranche sur différents modules.

8. Procédé selon la revendication 1,
caractérisé en ce qu'il peut utiliser une référence temporelle générée par un composant interface BUS fond de panier, et en ce que, dans ce cas, le changement de tranche est commandé par ledit composant qui alerte le processeur par une interruption, le processeur exécute ensuite une primitive qui commande au coprocesseur de changer d'application, et le coprocesseur contrôle alors que le changement de tranche est bien à l'intérieur d'une fenêtre temporelle.

9. Dispositif pour la mise en oeuvre du procédé selon l'une des revendications précédentes pour la gestion du contexte temps réel d'un système comprenant au moins un processeur apte à gérer plusieurs fonctions, ce dispositif se présentant sous la forme d'un composant coprocesseur,
caractérisé en ce qu'il est composé d'au moins trois automates, à savoir :
- un premier automate spécialisé dans la gestion des échanges entre le coprocesseur, ledit processeur, une mémoire locale (MiL), une mémoire d'échange (MiE), un BUS commun (BC), un BUS d'échange local (BiE) et avec le BUS événement matériel (BEV) ;
- un deuxième automate spécialisé dans l'affectation des tranches de temps aux différentes fonctions implantées suivant un ou des canevas préetablis ;
- un troisième automate pour la gestion de certains objets temps réel liés à la fonction active sur la tranche de temps en cours, en particulier la gestion des files des tâches éligibles en attente du processeur, la gestion du temps local tel que les délais, la gestion des files d'attente pour les boîtes aux lettres et sémaphores, des tâches en attente d'événements globaux ou locaux et la prise en compte des interruptions externes ;
ces trois automates communiquant entre eux par un BUS interne au composant, les primitives relatives aux événements globaux étant diffusées sur le BUS événement matériel.

10. Dispositif selon la revendication 9,
caractérisé en ce qu'il dispose de mécanismes assurant la ségrégation des objets temps réel propres aux différentes fonctions gérées sur le processeur auquel ce composant est associé.

11. Dispositif selon la revendication 9,
caractérisé en ce qu'il dispose de mécanismes assurant la commutation d'une fonction à une autre fonction correspondant à la fin d'une tranche de temps allouée à la fonction abandonnée et à une nouvelle tranche de temps allouée à la fonction nouvellement traitée.

12. Dispositif selon la revendication 9,
caractérisé en ce qu'il dispose en plus d'automates de recopie pour effectuer des transferts de données indépendamment de l'exécution du processeur entre une mémoire source et une mémoire destination, la mémoire source pouvant être la mémoire d'échange ou la mémoire locale du processeur et la mémoire destination la mémoire locale ou la mémoire d'échange.

13. Dispositif selon la revendication 9,
caractérisé en ce qu'il comprend sept automates, à savoir :
- un automate communication processeur A1 servant à gérer la gestion des échanges avec le processeur dont la distribution des traitements sur les autres automates en fonction des primitives demandées par le processeur,
- un automate gestion du temps A2 permettant de gérer le temps absolu, les tranches de temps et les objets locaux liés aux fonctions relatifs au temps, cet automate assurant la ségrégation à l'intérieur du composant des objets locaux à chaque fonction,
- un automate sémaphore A3 permettant de gérer les sémaphores binaires et les sémaphores à compteur et les files de tâches en attente associées,
- un automate boîtes aux lettres A4 permettant d'assurer la gestion des boîtes aux lettres dont les files d'attente des tâches associées,
- un automate ordonnanceur A5 permettant de gérer les files d'attente des tâches éligibles et donc d'émettre l'interruption vers le processeur,
- un automate événement A6 permettant d'assurer la gestion des événements dont les tâches en attente d'événement ainsi que la prise en compte des interruptions externes,
- un automate recopie A7 permettant d'assurer la gestion des recopies de bloc mémoire.

## Patentansprüche

1. Verfahren zur Echtzeitsteuerung eines Systems, umfassend wenigstens einen zur Steuerung mehrerer Funktionen befähigten Prozessor, dadurch gekennzeichnet, daß es die Steuerung
- der zeitlichen Aufteilung der Rechnerperiode des Prozessors in Zeitscheiben gegebenenfalls unterschiedlicher Dauer, ausgehend von einem vorgegebenen Raster,
- der Zuordnung der Zeitscheiben zu den verschiedenen gespeicherten Funktionen gemäß einem oder mehreren vorgegebenen Modellen, wobei die mit jeder dieser Funktionen zusammenhängenden Tasks außerhalb der dieser Funktion entsprechenden Zeitscheibe inaktiv sind,
- des Speicherns des Maschinenkontextes der laufenden Funktion am Ende einer Scheibe im Hinblick auf die Wiederaufnahme dieser Funktion während der nächsten, mit dieser verknüpften Zeitscheibe und
- des Ladens des Maschinenkontextes im Zusammenhang mit der Aktivierung der mit dieser Scheibe verknüpften Funktion, die zuvor, am Ende einer früheren, dieser Funktion entsprechenden Scheibe gespeichert wurde, zu Beginn einer neuen Scheibe durch einen mit dem Prozessor verbundenen Coprozessor umfaßt.

2. Verfahren nach Anspruch 1, dadurch gekennzeichnet, daß die Aufteilung der verschiedenen Betriebsmittel zwischen den laufenden Arbeiten und die Übernahme von Hilfsfunktionen durch einen Programmkern gewährleistet sind, der folgende Eigenschaften aufweist:
- er erlaubt die scheinbar gleichzeitige Ausführung mehrerer Programme, wobei ein Betriebssystem die Zeit des Befehlsprozessors und des Hauptspeichers zwischen Einheiten aufteilt, die als Tasks bezeichnet werden,
- er ist zur Synthese komplexer Operationen befähigt, wobei die Programmierung dieses Kerns sich als Erweiterung der Maschinensprache des Prozessors darstellt, und ein spezieller Mechanismus die Erzeugung von Primitiven erlaubt, deren Rolle darin besteht, die Intervention des Kerns zur Durchführung komplexer Operationen anzufordern.

3. Verfahren nach Anspruch 1, dadurch gekennzeichnet, daß der Prozessor zwei Programmebenen umfaßt, nämlich:
- eine erste, als "Anwendungsprogramm" bezeichnete Ebene, auf die sich eine Funktion zur Sicherung der Anordnung ihrer Tasks in bezug auf den Echtzeitkontext und insbesondere auf die Betriebsmittel und Ereignisse, die zur Ausführung der Funktion im Inneren erforderlich sind, stützt,
- eine zweite, als ,,Sequencer-Programm" bezeichnete Ebene, die die zur zeitlichen Aufteilung des Prozessors zwischen den verschiedenen auf dem Prozessor gespeicherten Funktionen erforderlichen Dienste und die Steuerung der globalen Ereignisse gewährleistet.

4. Verfahren nach Anspruch 1, dadurch gekennzeichnet, daß der Coprozessor die Zeitscheiben-Steuerung der Funktionen durch ein ,,Sequencer-Programm" gewährleistet und die in Form von Primitiven vom Prozessor angeforderten Dienste ausführt, um die Echtzeitverknüpfung der Funktionen innerhalb der entsprechenden Zeitscheiben ("Anwendungsprogramm") zu gewährleisten, und daß der Coprozessor ein Leitwerk umfaßt, das in der Lage ist, die Zuordnung der verschiedenen Funktionen durch Zeitscheiben zu steuern, wobei dieses Leitwerk alle auf dem damit verbundenen Prozessor gespeicherten Funktionen durch selektive Steuerung einer Gruppe von Tasks einer entsprechenden Funktion während der gerade im Prozessor verarbeiteten Zeitscheibe steuert, wobei verschiedene Gruppen von Tasks verschiedenen Funktionen entsprechen, die von ein- und demselben Coprozessor in ähnlicher Weise gesteuert werden können.

5. Verfahren nach Anspruch 4, dadurch gekennzeichnet, daß die erwähnten Coprozessoren gemäß zwei Funktionsmodi arbeiten:
- im Funktionsmodus vom Typ Slave wird er von dem Prozessor als Speicher betrachtet, wobei dieser Modus zur Ausführung von Primitiven eingesetzt wird und sich durch Lese- und Schreibvorgänge im Coprozessor äußert,
- im Funktionsmodus vom Typ Master kann er im Lokalspeicher des Prozessors lesen und schreiben.

6. Verfahren nach Anspruch 1, dadurch gekennzeichnet, daß am Ende einer Zeitscheibe der Coprozessor ein an den Prozessor gerichtetes Unterbrechungssignal erzeugt, um diesem zu signalisieren, daß er die laufende Funktion abbrechen muß, um die vom Coprozessor angezeigte zu übernehmen, und daß der Prozessor, sobald er das Unterbrechungssignal erhalten hat, die folgenden Schritte nacheinander ausführt:
- Ausführung einer Sequenz, die es ihm erlaubt, den Mindest-Maschinenkontext der laufenden Funktion für eine korrekte Wiederaufnahme in der nächsten, dieser zugeordneten Zeitscheibe zu speichern,
- Senden einer Botschaft an den Coprozessor, um ihm zu signalisieren, daß er bereit ist, die Nummer der erneut aktiven Funktion und die Task mit der höchsten Ausführungspriorität, die zu dieser Funktion gehört, zu empfangen,
- Wiederaufrufen eines mit der Aktivierung der Funktion und der Auswahl der Task zusammenhängenden Maschinenkontextes, dessen Kontext am Ende der letzten, mit der erneut geweckten Funktion zusammenhängenden Zeitscheibe gegebenenfalls gespeichert werden konnte.

7. Verfahren nach Anspruch 6, dadurch gekennzeichnet, daß es eine periodische Synchronisationsphase zur Unterhaltung einer allen Coprozessoren gemeinsamen Systemuhr umfaßt, um die Synchronisation der Zeitscheibenwechsel auf verschiedenen Modulen zu ermöglichen.

8. Verfahren nach Anspruch 1, dadurch gekennzeichnet, daß es eine zeitliche Bezugsgröße verwenden kann, die von einem rückseitenverdrahteten Bus als Schnittstellenkomponente erzeugt wird, und dadurch, daß der Wechsel der Zeitscheibe in diesem Fall von der Komponente gesteuert wird, die den Prozessor durch ein Unterbrechungssignal informiert, wobei der Prozessor anschließend eine Primitive ausführt, die dem Coprozessor den Befehl zum Wechsel der Anwendung gibt, und der Prozessor dann kontrolliert, daß der Wechsel der Zeitscheibe auch wirklich innerhalb eines Zeitfensters erfolgt.

9. Einheit zur Umsetzung des Verfahrens nach einem der vorhergehenden Ansprüche zur Steuerung der Echtzeitumgebung eines Systems, umfassend wenigstens einen zur Steuerung mehrerer Funktionen befähigten Prozessor, wobei die Einheit in Form einer Coprozessor-Komponente vorliegt, dadurch gekennzeicnnet, daß sie aus wenigstens drei Automaten besteht, nämlich aus:
- einem ersten Automaten, der auf die Steuerung des Austausches zwischen dem Coprozessor, dem Prozessor, dem Lokalspeicher (MiL), einem Wechselspeicher (MiE), einem gemeinsamen Bus (BC), einem Bus für den lokalen Austausch (BiE) und dem Bus für Hardware-Ereignisse (BEV) spezialisiert ist;
- einem zweiten Automaten, der auf die Zuordnung der Zeitscheiben zu den verschiedenen nach einem oder mehreren vorbestimmten Modellen gespeicherten Funktionen spezialisiert ist;
- einem dritten Automaten für die Steuerung bestimmter Echtzeitobjekte, die mit der aktiven Funktion auf der aktuellen Zeitscheibe verknüpft sind, insbesondere die Steuerung der Warteschlangen der anstehenden Tasks für den Prozessor, die Steuerung der lokalen Zeit, wie z. B. der Fristen, die Steuerung der Warteschlangen der Register und Semaphore, der auf globale oder lokale Ereignisse wartenden Tasks, und die Berücksichtigung externer Unterbrechungen;
wobei diese drei Automaten über einen Bus innerhalb der Komponente miteinander kommunizieren und die Primitiven der entsprechenden globalen Ereignisse über den Bus für Hardware-Ereignisse gesendet werden.

10. Einheit nach Anspruch 9, dadurch gekennzeichnet, daß sie über Mechanismen zur zuverlässigen Trennung der Echtzeitobjekte verfügt, die den verschiedenen, im Prozessor, mit dem diese Komponente verbunden ist, erzeugten Funktionen zugeordnet sind.

11. Einheit nach Anspruch 9, dadurch gekennzeichnet, daß sie über Mechanismen verfügt, welche das Umschalten von einer Funktion zu einer entsprechenden anderen Funktion am Ende einer der beendeten Funktion zugeordneten Zeitscheibe, und zu einer neuen, der neu behandelten Funktion entsprechenden Zeitscheibe gewährleisten.

12. Einheit nach Anspruch 9, dadurch gekennzeichnet, daß sie zusätzlich über Kopierautomaten zur Durchführung der Datentransfers, unabhängig von der Ausführung durch den Prozessor, zwischen einem Quellspeicher und einem Zielspeicher verfügt, wobei der Quellspeicher der Wechselspeicher oder der Lokalspeicher des Prozessors und der Zielspeicher der Lokalspeicher oder der Wechselspeicher sein kann.

13. Einheit nach Anspruch 9, dadurch gekennzeichnet, daß sie sieben Automaten umfaßt, nämlich:
- einen Automaten Al zur Kommunikation mit dem Prozessor, der zur Steuerung des Austauschs mit dem Prozessor, z. B. der Verteilung der Verarbeitungsoperationen auf die anderen Automaten in Abhängigkeit von Primitiven dient, die vom Prozessor abgefragt werden,
- einen Automaten A2 zur Steuerung der Zeit, der die Steuerung der absoluten Zeit, der Zeitscheiben und der lokalen Objekte, die zeitlich mit den Funktionen verknüpft sind, und die Zuweisung der lokalen Objekte innerhalb der Komponente zu jeder Funktion gewährleistet,
- einen Signalautomaten A3, der die Steuerung der binären Semaphore und der Zählersemaphore und der Warteschlangen der diesen zugeordneten Tasks erlaubt,
- einen Register-Automaten A4, der die Gewährleistung der Steuerung der Register, wie z. B. der Warteschlangen der jeweiligen Tasks, erlaubt,
- einen Leitwerk-Automaten A5, der die Steuerung der Warteschlangen der anstehenden Tasks und somit das Senden des Unterbrechungssignals an den Prozessor erlaubt,
- einen Ereignis-Automaten A6, der die Gewährleistung der Steuerung von Ereignissen,
- z. B. der auf ein Ereignis wartenden Tasks, sowie die Berücksichtigung externer Unterbrechungen erlaubt,
- einen Kopier-Automaten A7, der die Gewährleistung der Steuerung des Kopierens von Speicherblöcken erlaubt.

## Claims

1. A method for the management of the real-time context of a system comprising at least one processor capable of managing several functions, characterized in that it comprises management by a coprocessor, associated with said processor, of:
- the time slicing, from a pre-established frame, of the processing cycle of the processor, into slices of possibly different durations,
- the allocation of said time slices to the different functions installed according to one or plural pre-established layouts, the tasks related to each of said functions being inoperative beyond the time slice corresponding to said function,
- the saving, at the end of a slice of the machine context of the function being processed, with a view to resuming this function during the following slice associated with it, and
- the loading, at the start of a new slice, of the machine context linked with the activating of the function associated with this slice and which was previously saved at the end of a previous slice corresponding to this function.

2. The method as claimed in claim 1, characterized in that the sharing of the different resources between the jobs in process and the handling of the auxiliary functions are performed by a supervisor nucleus with the following characteristics:
- it is capable of executing several programs in apparent simultaneity, an operating system distributing the time of the instruction processor and central memory between entities called "tasks";
- it synthesizes complex operations, the programming of this nucleus taking the form of an extension of the machine language of the processor, a special mechanism enabling the creation of primitives whose role it is to request intervention of said nucleus to perform complex operations.

3. The method as claimed in claim 1, characterized in that said processor comprises two levels of execution, i.e.
- a first level called "Application Supervisor" on which a function will rely to schedule its tasks in relation to the real-time context and, in particular, in relation to the resources and events required by the function to perform within said processor;
- a second level called "Sequencing Supervisor" which provides the services needed for time-sharing of said processor between the different functions installed in said processor and management of the global events.

4. The method as claimed in claim 1, characterized in that said coprocessor manages functions by time-slices by means of a Sequencing Supervisor, and performs the services requested in the form of primitives by said processor to enable real-time linking of the functions, within corresponding time slices (Application Supervisor), and in that said coprocessor comprises a scheduler capable of managing said allocation by time slices to the different functions, said scheduler managing all the tasks installed in the associated processor, by selective management of a group of tasks of a function corresponding to the time slice in process in said processor, several groups of tasks corresponding to several functions being capable of being managed in a similar manner by a same coprocessor.

5. The method as claimed in claim 4, characterized in that said coprocessors function in two operating modes:
- a slave type operating mode, in which it is perceived by the processor as memory; this mode being used to execute primitives and being translated by reading and writing at the coprocessor address;
- a master type operating mode, in which it can read or write data in the local memory.

6. The method as claimed in claim 1, characterized in that, at the end of a time slice, said coprocessor generates an interruption destined for indicating to the processor that it must abort the function in process to take up the function indicated by said coprocessor, and in that, until receipt of said interruption, said processor performs the following successive stages:
- execution of a sequence enabling it to save the minimum machine context of said function in process for proper resumption at the next associated time slice;
- transmission of a message to said coprocessor for advising it that it is ready to receive the number of the newly active function as well as the top priority task to be executed belonging to this function;
- reloading of the machine context linked with the activation of said function and with the election of said task of which the context may have been saved at the end of the last time slice relating to the newly reactivated task.

7. The method as claimed in claim 6, characterized in that it comprises a periodical synchronization phase for maintaining a system time common to all the coprocessors for enabling synchronization of the slice changes in the different modules.

8. The method as claimed in claim 1, characterized in that it can use a time reference generated by a backpanel bus interface component and in that, in this case, said slice change is commanded by said component which alerts said processor by means of an interruption, said processor then executing a primitive which orders said coprocessor to change applications, and said coprocessor subsequently checking that said slice change is indeed within a time window.

9. A device for implementing the method as claimed in any one of the previous claims, for managing the real-time context of a system comprising at least a processor capable of managing plural functions, said device being in the form of a coprocessor component, characterized in that it comprises at least three automata, i.e.
- a first automaton specialized in the management of exchanges between said coprocessor, said processor, a local memory (MiL), a swap memory (MiE), a common bus (BC), a local exchange bus (BiE), and with the hardware event bus (BEV);
- a second automaton specialized in allocating time slices to the different functions according to (a) pre-established pattern(s);
- a third automaton for the management of certain real-time objects linked with the active function being performed during the time slice in process, especially management of queues of eligible tasks awaiting said processor, management of local time such as the timeouts, management of queues awaiting the mailboxes and semaphores, tasks awaiting global or local events and the handling of external interruptions;
these three automata communicating with one another by means of a bus inside the component, the primitives relating to the global events being broadcast on said hardware event bus.

10. The device as claimed in claim 9, characterized in that it has mechanisms ensuring segregation of the real-time objects specific to the different functions managed in said processor with which this component is associated.

11. The device as claimed in claim 9, characterized in that it has mechanisms ensuring the switching from one function to another function corresponding to the end of a time slice allocated to the function aborted and to a new time slice allocated to the newly processed function.

12. The device as claimed in claim 9, characterized in that it also has copy automata for transferring data independently of the execution of said processor, between a source memory and a destination memory; said source memory can be said swap memory or said local memory of said processor and said destination memory can be said local memory or said swap memory.

13. The device as claimed in claim 9, characterized in that it comprises seven automata, i.e.
- a processor communications automaton A1 used to handle the management of exchanges with said processor, including the distribution of processings over the other automata as a function of primitives requested by said processor;
- a time management automaton A2 for management of said absolute time, said time slices and said local objects linked with the time-related functions; this automaton segregating the local objects of each function within the component;
- a semaphore automaton A3 for management of the binary semaphores and the counter semaphores and the associated queues of tasks on stand-by:
- a mailbox automaton A4 for management of the mailboxes and the associated queues of tasks on stand-by;
- a scheduler automaton A5 for management of the queues of eligible tasks on stand-by and therefore capable of transmitting said interruption to said processor;
- an event automaton A6 for management of events including the tasks awaiting an event, and the handling of the external interruptions;
- a copy automaton A7 for management of the copying of memory blocks.
